# EUROPÄISCHE PATENTSCHRIFT

(11) **EP 3 837 454 B1**
(45) Veröffentlichungstag und Bekanntmachung des Hinweises auf die Patenterteilung: **24.07.2024**
(21) Anmeldenummer: 19745059.6
(22) Anmeldetag: 15.07.2019
(51) Int. Cl.: B60G 21/10, F16H 1/46, F16H 57/08

(54) **ZAHNRADANORDNUNG UND AKTUATOR**
GEARWHEEL ARRANGEMENT AND ACTUATOR
ARRANGEMENT DE ROUES DENTÉES ET ACTIONNEUR

(30) Priorität: 16.08.2018 DE 102018213807
(43) Veröffentlichungstag der Anmeldung: 23.06.2021
(73) Patentinhaber: ZF Friedrichshafen AG, 88046 Friedrichshafen (DE)
(72) Erfinder: SCHWARZE, Rene, 49434 Vörden (DE); MARS, Christoph, 49401 Damme (DE)
(74) Vertreter: ZF Friedrichshafen AG
(86) Internationale Anmeldenummer: PCT/EP2019/068936
(87) Internationale Veröffentlichungsnummer: WO 2020/035239

(56) Entgegenhaltungen:
- DE-A1- 102008 035 114
- DE-A1- 102014 223 472
- GB-A- 926 920
- US-B2- 9 416 849

## Beschreibung

Die Erfindung betrifft eine Zahnradanordnung eines insbesondere mehrstufigen Planetengetriebes für einen Aktuator eines verstellbaren Wankstabilisators gemäß dem Oberbegriff des Patentanspruchs 1 sowie einen Aktuator für einen verstellbaren Wankstabilisator gemäß Anspruch 15.

Planetengetriebe kommen in unterschiedlichen Bereichen der Technik zum Einsatz. Es handelt sich dabei um sogenannte Umlaufrädergetriebe, das heißt Getriebe, die neben einer gehäusefesten Welle auch Achsen besitzen, die auf einer Kreisbahn im Gehäuse umlaufen. Bei Planetengetrieben verlaufen die umlaufenden Achsen parallel zur gehäusefesten Welle, wobei die sich auf den umlaufenden Achsen drehenden Zahnräder ein zentrales Rad wie Planeten die Sonne umkreisen. In der Fahrzeugtechnik, insbesondere in einem Aktuator eines verstellbaren Wankstabilisators kommen Planetengetriebe zum Einsatz, die zur Erzielung eines gewünschten Übersetzungsverhältnisses oftmals mehrstufig ausgeführt sind.

Zur Steigerung der Fahrzeugstabilität sowie des Fahrkomforts ist es für sich gesehen bekannt, Kraftfahrzeuge mit einem Wankstabilisator auszustatten. In einfachster Ausführung handelt es sich hierbei um eine im Wesentlichen c-förmige Drehstabfeder, die im mittigen Bereich drehbar gegenüber der Karosserie gelagert ist und deren äußere, sich gegenüberliegende Enden jeweils mit einer Radaufhängung gekoppelt sind. Damit sorgt der Wankstabilisator dafür, dass die Karosserie des Fahrzeugs bei einer Kurvenfahrt nicht nur an der kurvenäußeren Seite einfedert (bedingt durch die Zentrifugalkraft), sondern dass zudem das kurveninnere Rad etwas abgesenkt wird (Kopierverhalten).

Zur weiteren Steigerung des Fahrkomforts ist es aus dem Stand der Technik bekannt, derartige Wankstabilisatoren verstellbar auszuführen. Der Wankstabilisator umfasst dazu einen Aktuator und ist in zwei mit Hilfe des Aktuators relativ zueinander verdrehbare Stabilisatorabschnitte geteilt. Durch Verdrehung der Stabilisatorabschnitte zueinander wird eine Wankbewegung des Fahrzeugaufbaus gezielt erzeugt oder einer durch äußere Einflüsse hervorgerufenen Wankbewegung des Fahrzeugaufbaus gezielt entgegengewirkt. Es sind verstellbare Wankstabilisatoren bekannt, deren Aktuator einen Elektromotor sowie ein damit in Antriebsverbindung stehendes mehrstufiges Planetengetriebe zur Übersetzung des Drehmoments beziehungsweise der Drehzahl des Elektromotors aufweist.

In einem darin vorkommenden Planetengetriebe ist oftmals eine Zahnradanordnung vorgesehen, die ein Sonnenrad, einen Planetenträger sowie mit dem Planetenträger verbundene Planetenräder aufweist, die mit dem Sonnenrad in kämmendem Eingriff stehen. Dabei sind Sonnenrad und Planetenträger um eine gemeinsame Rotationsachse drehbar, insbesondere durch deren koaxiale Anordnung, und stützen sich axial aufeinander ab. Insbesondere bei einem mehrstufigen Planetengetriebe, bei dem wenigstens zwei Planetenstufen in koaxialer Ausrichtung axial aneinander angrenzend angeordnet und miteinander antriebsverbunden sind, besteht ein Bedarf für einen axialen Spielausgleich. Bei einer aus dem Stand der Technik bekannten Zahnradanordnung eines mehrstufigen Planetengetriebes für einen Aktor eines verstellbaren Wankstabilisators ist ein Planetenträger der ersten Planetenstufe (antriebsseitig, das heißt dem Elektromotor zugewandt) mittels einer Wellfeder sowie einem Axialkugellager gegenüber einem Lagerschild des Elektromotors abgestützt. Durch Wellfeder und Axialkugellager wird eine Funktionstrennung erreicht. Die Wellfeder erzeugt eine zum Spielausgleich notwendige Axialkraft, während das Axialkugellager die rotatorische Bewegung zwischen Planetenträger und Elektromotor aufnimmt. Als nachteilig daran ist anzusehen, dass der Montageaufwand verhältnismäßig hoch ist und insbesondere das Axialkugellager ein aufwändiges Bauteil darstellt.

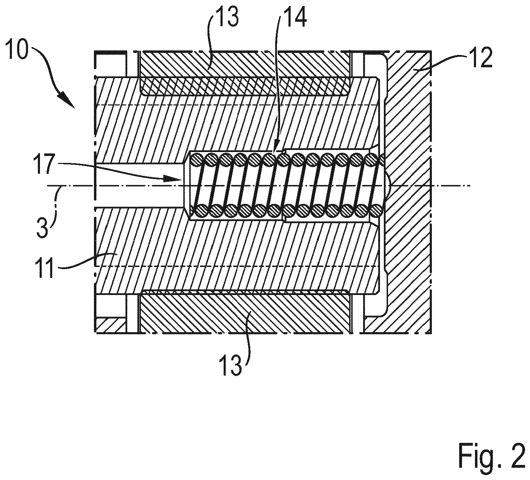

Aus DE 10 2008 035 114 A1 ist eine Zahnradanordnung eines einstufigen Planetengetriebes eines Aktuators eines verstellbaren Wankstabilisators bekannt, welche die Basis für den Oberbegriff des Anspruchs 1 bildet. Der Planetenträger ist gemäß dortiger Fig. 2 mittels zweier Axiallager 43 und 44 axial beidseitig gegenüber einem sich durch den Planetenträger erstreckenden Sonnenrad (Motorwelle 34) gesichert. Das Axiallager 44 stützt sich an einer Feder 45 ab, die sich wiederum gegenüber einem auf der Motorwelle 34 angeordneten Stützring 60 axial abstützt. Als nachteilig an der Gestaltung gemäß DE 10 2008 035 114 A1 ist anzusehen, dass die Axiallager komplexe Bauteile darstellen.

Aus GB 926 920 A ist ganz allgemein eine Zahnradanordnung eines mehrstufigen Planetengetriebes bekannt.

Aus DE 10 2014 223 472 A1 ist eine weitere Zahnradanordnung bekannt. Betriebsbedingt führen Planetenträger und Sonnenrad der Zahnradanordnung Relativbewegungen zueinander durch. Im axial vorgespannten Kontaktbereich zwischen Federelement gegenüber dem Planetenträger und/oder Sonnenrad kommt es daher zu Verschleiß und in Folge zu einer verringerten Lebensdauer der Zahnradanordnung.

Es ist eine Aufgabe der vorliegenden Erfindung eine Zahnradanordnung der in Rede stehenden Art anzugeben, die sich mit verringertem Aufwand herstellen lässt, wobei ein für den Einsatzzweck erforderlicher Spielausgleich bei zugleich erhöhter Lebensdauer erzielt werden soll.

Die Aufgabe wird gelöst durch eine Zahnradanordnung mit den Merkmalen des Anspruchs 1. Es handelt sich dabei um eine Zahnradanordnung eines insbesondere mehrstufigen Planetengetriebes für einen Aktuator eines verstellbaren Wankstabilisators, aufweisend ein Sonnenrad, einen Planetenträger sowie mit dem Planetenträger verbundene Planetenräder, die mit dem Sonnenrad in kämmendem Eingriff stehen. Das Sonnenrad und der Planetenträger sind um eine gemeinsame Rotationsachse drehbar und stützen sich axial aufeinander ab. Erfindungsgemäß ist die Zahnradanordnung mit einem zwischen Planetenträger und Sonnenrad wirkenden Federelement zur Erzielung einer axialen Vorspannung versehen.

Demnach wurde zunächst erkannt, dass eine Zahnradanordnung innerhalb eines mehrstufigen Planetengetriebes eines Aktuators eines verstellbaren Wankstabilisators zweckmäßigerweise eine Maßnahme zum axialen Spielausgleich aufweist, indem diese in sich eine axiale Vorspannung - im Einbauzustand innerhalb des Planetengetriebes - aufbringen kann. Im Unterschied zu der zuvor beschriebenen vorbekannten Zahnradanordnung ist erfindungsgemäß vorgesehen, ein zwischen Planetenträger und Sonnenrad der Zahnradanordnung wirkendes Federelement zu diesem Zweck anzuordnen. Planetenträger und Sonnenrad stützen sich somit im Einbauzustand innerhalb des Planetengetriebes mittels des axial vorgespannten Federelementes aufeinander ab, um auf diese Weise einen Spielausgleich zu erzielen. Innerhalb eines mehrstufigen Planetengetriebes kann eine erfindungsgemäße Zahnradanordnung in einer oder in mehreren Stufen des Planetengetriebes zum Einsatz kommen. In vorteilhafter Weise kann bereits eine erfindungsgemäße Zahnradanordnung einer Stufe des Planetengetriebes einen Spielausgleich auch für weitere, insbesondere sämtliche Stufen des Planetengetriebes bewirken.

Grundsätzlich kann es sich bei dem zwischen Planetenträger und Sonnenrad wirkenden Federelement um verschiedenartige, zur Ausübung einer axialen Vorspannung geeignete Bauteile handeln. Erfindungsgemäß ist im Sonnenrad eine zentrale Ausnehmung zur Aufnahme des Federelements ausgebildet. Die Ausnehmung ist zweckmäßigerweise so gestaltet, dass das Federelement sich hinreichend axial abstützen kann und zudem sicher positioniert und ausgerichtet ist. Die zentrale Ausnehmung liegt zweckmäßigerweise mittig auf der Rotationsachse von Sonnenrad und Planetenträger. Ergänzend kann auch im Planetenträger eine zentrale Ausnehmung zur Aufnahme des Federelements ausgebildet sein.

Das Federelement der Zahnradanordnung kann unterschiedlich gestaltet sein, um seine Funktion zu erfüllen. Bevorzugt handelt es sich bei dem Federelement um eine Schraubenfeder.

Gemäß einer vorteilhaften Weiterbildung der Zahnradanordnung ist die Ausnehmung zur Aufnahme des Federelements als axiale Bohrung, insbesondere als Stufenbohrung im Sonnenrad und/oder im Planetenträger ausgeführt. In Kombination mit der Ausführung des Federelements als Schraubenfeder bietet eine Bohrung den Vorteil, dass die Schraubenfeder sich einerseits axial im Bohrgrund abstützen kann und zudem radial sicher geführt wird. Im Fall einer Stufenbohrung stützt sich das Federelement axial an einem Absatz der Stufenbohrung ab.

Während des Betriebes des verstellbaren Wankstabilisators führen Planetenträger und Sonnenrad der Zahnradanordnung Relativbewegungen zueinander durch. Insbesondere drehen sich Sonnenrad und Planetenträger zueinander um die gemeinsame Rotationsachse mit wechselnder Drehrichtung. Zur Vermeidung von Verschleiß, insbesondere bedingt durch übermäßigen Temperaturanstieg im Reibkontakt (Warmfressen) ist die Zahnradanordnung erfindungsgemäß gekennzeichnet durch Mittel zur Verminderung von Reibung des Federelements gegenüber Planetenträger und/oder Sonnenrad. Unterschiedliche Mittel können dabei für sich oder in Kombination miteinander zum Einsatz kommen.

Ein vorteilhaftes Mittel zur Verminderung von Reibung besteht darin, dass zwischen wenigstens einem axialen Ende des Federelements und einer diesem zugewandten Kontaktfläche des Planetenträgers und/oder Sonnenrads ein Gleitelement zur Begünstigung reibungsarmer Relativbewegungen des Sonnenrads gegenüber dem Planetenträger, insbesondere um die Rotationsachse, angeordnet ist. In diesem Fall steht also wenigstens ein axiales Ende des Federelements mit einer diesem zugewandten Kontaktfläche des Planetenträgers und/oder Sonnenrads nicht in direktem Kontakt, vielmehr ist ein reibungsminderndes Gleitelement dazwischen angeordnet. Dieses kann auf unterschiedliche Weise gestaltet sein.

Bevorzugt ist ein zum Einsatz kommendes Gleitelement aus Kunststoff oder Messing gefertigt.

Weiterhin kann das Gleitelement auf unterschiedliche Weise Komponenten der Zahnradanordnung zugeordnet sein. Gemäß einer bevorzugten Weiterbildung ist das Gleitelement mit dem Federelement verbunden, wozu insbesondere Schnappbefestigungsmittel vorgesehen sein können. Damit ist eine einfache Montage (werkzeuglos) gewährleistet. Das Gleitelement und das Federelement können alternativ oder ergänzend auch auf andere Weise form-, kraft- und/oder stoffschlüssig (beispielsweise Kleben, Reibschweißen) miteinander verbunden sein.

Eine zweckmäßige Gestaltung sieht vor, dass das Gleitelement einen dem Federelement zugewandten Verbindungsbereich und einen dem Federelement abgewandten Gleitbereich zur axialen Abstützung gegenüber dem Planetenträger und/oder Sonnenrad aufweist.

Vorteilhaft ist der Verbindungsbereich des Gleitelements geeignet, das Federelement formschlüssig aufzunehmen, vorzugsweise ist der Verbindungsbereich dazu pinförmig, ringförmig oder hutförmig ausgebildet.

Wie zuvor beschrieben, kann das Gleitelement mit dem Federelement verbunden sein. Ergänzend oder alternativ ist es denkbar, dass das Gleitelement mit dem Planetenträger und/oder Sonnenrad verbunden, insbesondere darin eingepresst oder damit verklebt ist. Eine Relativbewegung, insbesondere Verdrehung um die Rotationsachse kann in diesem Fall zwischen Federelement und Gleitelement stattfinden.

Erfindungsgemäß ist als reibungsmindernde Maßnahme vorgesehen, dass wenigstens eine dem Federelement zugewandte Kontaktfläche des Planetenträgers und/oder Sonnenrads gleitoptimiert ausgeführt, insbesondere beschichtet ist wie beispielsweise mit Molybdän oder DLC (Diamond-Like Carbon). In diesem Fall kann auf den Einsatz eines zusätzliche Gleitelements verzichtet werden, wodurch die Montage nochmals vereinfacht wird.

Wiederum alternativ oder ergänzend ist es denkbar, dass es sich bei dem Gleitelement um eine Kugel handelt. Diese kann beispielsweise aus Stahl, Kunststoff oder Messing gefertigt sein und liegt an einem axialen Ende des Federelements an. Gegenüber dem Sonnenrad und/oder dem Planetenträger bildet sich in diesem Fall eine punktförmige Kontaktfläche, welche vorteilhaft eine reibungsarme Relativbewegung um die Rotationsachse ermöglicht.

Wie bereits eingangs erwähnt, kommt die erfindungsgemäße Zahnradanordnung vorteilhaft in einem mehrstufigen Planetengetriebe zum Einsatz. Vorteilhaft ist das Sonnenrad mit dem Planetenträger einer vorgelagerten Planetenstufe des Planetengetriebes drehfest verbunden, insbesondere einteilig damit ausgeführt.

Die erfindungsgemäße Zahnradanordnung kann in einer oder mehreren Stufen eines mehrstufigen Planetengetriebes zum Einsatz kommen. Besonders bevorzugt ist die Zahnradanordnung Teil der abtriebsseitigen Stufe des mehrstufigen Planetengetriebes.

Die eingangs genannte Aufgabe wird zudem gelöst durch einen Aktuator mit den Merkmalen des Anspruchs 16. Es handelt sich dabei um einen Aktuator für einen verstellbaren Wankstabilisator eines Kraftfahrzeugs, mit einem Elektromotor und einem damit in Antriebsverbindung stehenden mehrstufigen Planetengetriebe, das eine wie zuvor beschriebene Zahnradanordnung aufweist.

Die Erfindung wird nachfolgend anhand verschiedener in der Zeichnung dargestellter Ausführungsbeispiele näher erläutert. Daraus ergeben sich auch weitere Merkmale und vorteilhafte Wirkungen der Erfindung. In der Zeichnung zeigen:
Fig. 1 einen verstellbaren Wankstabilisator eines Kraftfahrzeugs in schematischer Ansicht,
Fig. 2 eine erfindungsgemäße Zahnradanordnung in schematischer Darstellung in teilweisem Ausschnitt gemäß einem Ausführungsbeispiel der Erfindung,
Fig. 3 eine Zahnradanordnung gemäß einem Ausführungsbeispiel der Erfindung in schematischer Darstellung,
Fig. 3a eine Anordnung von Federelement und Gleitelement mit pinförmigem Verbindungsbereich,
Fig. 3b eine Anordnung von Federelement und Gleitelement mit ringförmigem Verbindungsbereich,
Fig. 3c eine Anordnung von Federelement und Gleitelement mit hutförmigem Verbindungsbereich,
Fig.4a ein Gleitelement mit pinförmigem Verbindungsbereich, der zusätzlich mit Schnappbefestigungsmitteln versehen ist, in perspektivischer Darstellung,
Fig. 4b das Gleitelement wie in Fig. 4a in Seitenansicht mit daran befestigtem Federelement,
Fig. 5 eine Zahnradanordnung gemäß einem weiteren Ausführungsbeispiel der Erfindung, mit in den Planetenträger eingepresstem Gleitelement,
Fig. 6 eine Zahnradanordnung gemäß einem weiteren Ausführungsbeispiel der Erfindung mit einer Kugel als Gleitelement.

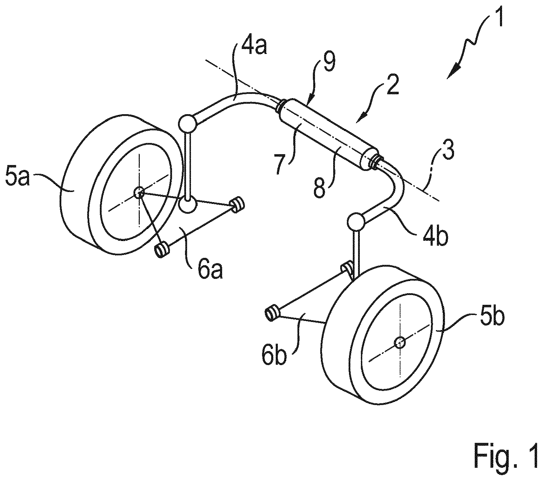

Zur Veranschaulichung des Einsatzgebietes der Erfindung zeigt zunächst Figur 1 einen verstellbaren Wankstabilisator 1 in schematischer Ansicht. Der Wankstabilisator 1 ist Teil eines nicht vollständig gezeigten Fahrwerks eines (nicht dargestellten) Fahrzeugs. Ein erstes Rad 5a und ein auf der gegenüberliegenden Fahrzeugseite angeordnetes zweites Rad 5b sind jeweils über eine aus Vereinfachungsgründen hier nicht näher erläuterte Radaufhängung 6a beziehungsweise 6b mit dem Aufbau des Fahrzeugs verbunden. Jede der Radaufhängungen 6a beziehungsweise 6b ist an ein Ende eines zugehörigen Stabilisatorabschnittes 4a beziehungsweise 4b des verstellbaren Wankstabilisators 1 gekoppelt. Die beiden Stabilisatorabschnitte 4a und 4b sind fahrzeugmittig über einen Aktuator 2 miteinander verbunden.

Auf für sich gesehen bekannte Weise ist der Wankstabilisator 1 um eine Rotationsachse 3 drehbar gegenüber dem Fahrzeugaufbau gelagert (nicht gezeigt). Der Aktuator 2, hier vereinfacht dargestellt als zylindrischer Körper, umfasst im Wesentlichen ein Aktuatorgehäuse 9, einen Elektromotor 7 sowie ein damit antriebsverbundenes mehrstufiges Planetengetriebe 8 in bezogen auf die Rotationsachse 3 koaxialer Anordnung. Über den Elektromotor 7 und das Planetengetriebe 8 stehen die Stabilisatorabschnitte 4a und 4b in Antriebsverbindung. Bei stehendem Elektromotor 7 sind die beiden Stabilisatorabschnitte 4a, 4b über den Aktuator 2 starr miteinander verbunden. Durch Betrieb des Elektromotors 7 lassen sich die Stabilisatorabschnitte 4a, 4b abhängig von der Drehrichtung des Elektromotors 7 um die Rotationsachse 3 gegeneinander verdrehen, um den Wankstabilisator 1 auf für sich gesehen bekannte Weise zu verstellen.

Das im Aktuator 2 vorgesehene Getriebe 8 ist als mehrstufiges Planetengetriebe ausgeführt. Beispielsweise umfasst dieses 3 Planetenstufen (nicht gezeigt) die koaxial aneinander angrenzend angeordnet und miteinander antriebsverbunden sind.

Figur 2 zeigt eine erfindungsgemäße Zahnradanordnung 1 eines mehrstufigen Planetengetriebes für einen Aktuator eines verstellbaren Wankstabilisators, wie dieser anhand von Figur 1 in Grundzügen beschrieben wurde, gemäß einem ersten Ausführungsbeispiel der Erfindung. Die in Figur 2 gezeigte Zahnradanordnung 10 ist ausschnittsweise dargestellt. Auf einer Rotationsachse 3 ist ein Sonnenrad 11 angeordnet. Das Sonnenrad 11 steht in kämmendem Eingriff mit Planetenrädern 13. Jedes der Planetenräder 13 ist für sich drehbar gelagert gegenüber einem Planetenträger 12, der wiederum - wie das Sonnenrad 11 - um die gemeinsame Rotationsachse 3 drehbar ist. Auf für sich gesehen bekannte, hier nicht dargestellte Weise laufen die Planetenräder 13 in einem radial außenliegenden Bereich der Zahnradanordnung 10 an einer Innenverzahnung eines am Aktuatorgehäuse des Aktuators ausgebildeten (feststehenden) Hohlrads ab. Das Sonnenrad 11, die Planetenräder 13 und der Planetenträger 12 bilden gemeinsam die abtriebsseitige Stufe eines mehrstufigen Planetengetriebes, beispielsweise eines dreistufigen Planetengetriebes. Wie in Figur 2 zu sehen, ist im Sonnenrad 11 eine zentrale Ausnehmung 17 in Form einer axialen Bohrung entlang der Rotationsachse 3 ausgebildet. Die Bohrung ist als Stufenbohrung ausgeführt, wobei in die Bohrung ein Federelement 14 in Form einer Schraubenfeder eingeführt und darin aufgenommen ist, die sich mit einem axialen Ende an einem Absatz der Stufenbohrung abstützt. Die Schraubenfeder 14 erstreckt sich zwischen dem Absatz der Stufenbohrung in axialer Richtung entlang der Rotationsachse 3 bis zu einer Kontaktfläche des Planetenträgers 12 und berührt diese. Im gezeigten Einbauzustand ist die Schraubenfeder 14 axial vorgespannt, das heißt die Schraubenfeder 14 weist im gezeigten Einbauzustand (vorgespannt) eine geringere axiale Länge auf als in einem ungespannten Ursprungszustand. Die Schraubenfeder 14 sorgt somit dafür, dass sich Sonnenrad 11 und Planetenträger 12 nicht nur axial aufeinander abstützen, sondern zudem axial gegeneinander vorgespannt sind, wodurch ein axiales Spiel zwischen Sonnenrad 11 und Planetenträger 12 ausgeglichen wird.

Innerhalb eines mehrstufigen Planetengetriebes lässt sich die durch die Zahnradanordnung 10 erzielbare axiale Vorspannung dazu nutzen, auch in weiteren vor- oder nachgelagerten Planetenstufen einen Spielausgleich zu bewirken, insbesondere wenn diese fliegend aufeinander gelagert sind. Dazu kann beispielsweise das Sonnenrad 11 (vergleiche Figur 2) mit dem Planetenträger einer vorgelagerten Planetenstufe des mehrstufigen Planetengetriebes drehfest verbunden, insbesondere einteilig damit ausgeführt sein.

Zur Verminderung der im Betrieb der Zahnradanordnung auftretenden Reibung des Federelements gegenüber dem Planetenträger und/oder Sonnenrad werden in den nachfolgenden Figuren verschiedene Maßnahmen gezeigt und erläutert, die für sich oder gegebenenfalls in Kombination miteinander zum Einsatz kommen können.

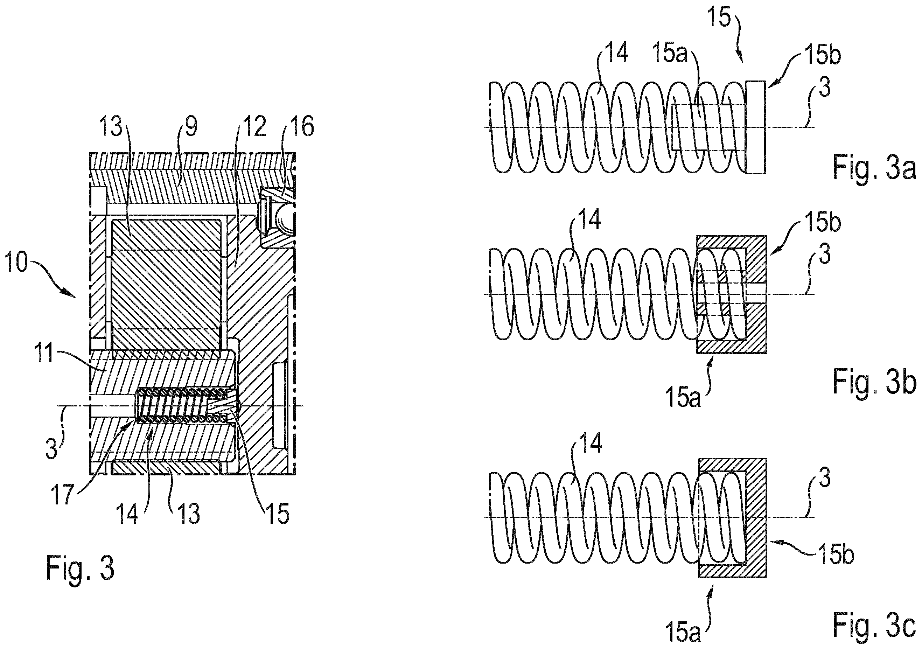

Figur 3 zeigt eine Zahnradanordnung 10 gemäß einem Ausführungsbeispiel der Erfindung, die zunächst den gleichen Grundaufbau wie Anhand von Figur 2 erläutert, aufweist. Die Figur 3 zeigt einen größeren Bildausschnitt, demnach ist zusätzlich auch ein Abschnitt des Aktuatorgehäuses 9 zu sehen, an welchem die Planetenräder 13 abrollen. Weiterhin ist ein Wälzlager 16 teilweise dargestellt, mittels welchem der Planetenträger 12 gegenüber dem Aktuatorgehäuse 9 drehbar um die Rotationsachse 3 gelagert ist.

Im Unterschied zu Figur 2 ist bei der in Figur 3 gezeigten Zahnradanordnung 10 eine Maßnahme zur Verminderung von Reibung des Federelements 14 gegenüber dem Planetenträger 12 getroffen worden. Das Federelement 14 in Form der Schraubenfeder steht mit dem Planetenträger 12 nicht mehr unmittelbar, sondern mittelbar in Kontakt. Zwischen einem dem Planetenträger 12 zugewandten axialen Ende der Schraubenfeder 14 und einer diesem zugewandten Kontaktfläche des Planetenträgers 12 ist ein Gleitelement 15 angeordnet. Das Gleitelement 15 ist beispielsweise aus Kunststoff oder Messing gefertigt und ist mit der Schraubenfeder 14 formschlüssig verbunden. Das Gleitelement 15 nimmt einerseits die axiale Vorspannkraft der Schraubenfeder 14 auf und stützt sich andererseits gegenüber dem Planetenträger 12 ab, wodurch reibungsarme Relativbewegungen des Sonnenrads 11 gegenüber dem Planetenträger 12 um die Rotationsachse 3 auf konstruktiv einfache Weise begünstigt werden. Das Gleitelement 15 selbst kann auf unterschiedliche Weisen gestaltet sein.

Figur 3a zeigt eine Anordnung von Schraubenfeder 14 und Gleitelement 15, wobei das Gleitelement 15 einen dem Federelement 14 zugewandten Verbindungsbereich 15a und einen dem Federelement 14 abgewandten Gleitbereich 15b zur axialen Abstützung gegenüber dem Planetenträger 12 aufweist. Der Verbindungsbereich 15 des in Figur 3a gezeigten Gleitelements 15 ist pinförmig ausgebildet und ragt bereichsweise in die Schraubenfeder 14 hinein, um diese formschlüssig aufzunehmen.

Bei der in Figur 3b gezeigten Anordnung von Schraubenfeder 14 und Gleitelement 15 weist das Gleitelement 15 wieder einen Verbindungsbereich 15a und einen Gleitbereich 15b auf, wobei der Verbindungsbereich 15a in diesem Fall ringförmig ausgebildet ist, um ein axiales Ende der Schraubenfeder 14 aufzunehmen. Das axiale Ende der Schraubenfeder 14 wird in diesem Falle abschnittweise auch radial umgriffen.

Bei der in Figur 3c gezeigten Anordnung von Schraubenfeder 14 und Gleitelement 15 ist der Verbindungsbereich 15a hutförmig ausgebildet, ein axiales Ende der Schraubenfeder 14 wird radial davon umschlossen.

Es sei angemerkt, dass das Gleitelement 15 zweckmäßigerweise mit dem Federelement 14 (Schraubenfeder) verbunden ist. Die Verbindung kann form- und/oder kraftschlüssig und/oder stoffschlüssig vorliegen.

Allgemein sei angemerkt, dass bei dem in Figur 3 gezeigten Ausführungsbeispiel ein Gleitelement 15 - wie auch immer dieses gestaltet sei - zwischen Federelement 14 und Planetenträger 12 wirkt. Ergänzend oder alternativ ist es ebenfalls denkbar, das Gleitelement oder ein zusätzliches Gleitelement zwischen Federelement 14 und Sonnenrad 11 anzuordnen.

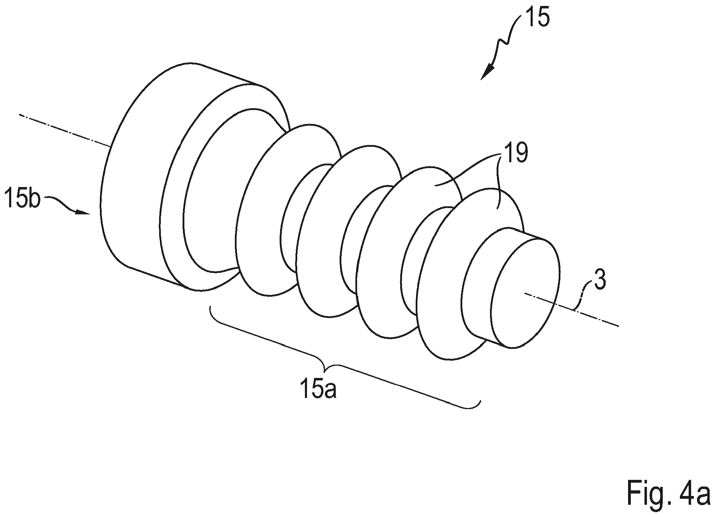

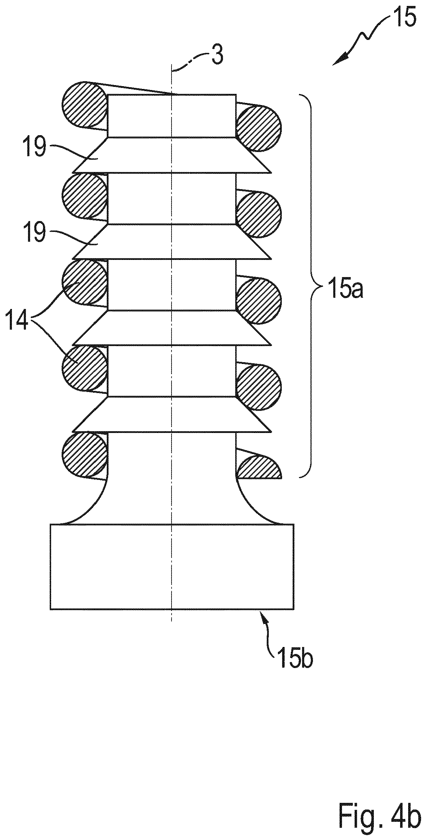

In den Figuren 4a und 4b ist beispielhaft ein Gleitelement 15 gezeigt, an welchem sich ein Federelement in Form einer Schraubenfeder 14 durch Schnappbefestigungsmittel in Form von umlaufenden Widerhaken 19 befestigen lässt. Figur 4a zeigt ein solches Gleitelement 15 in perspektivischer Darstellung als Einzelbauteil. Das Gleitelement 15 gliedert sich wieder in einen Verbindungsbereich 15a und einen Gleitbereich 15b, der zur axialen Abstützung des Gleitelements 15 gegenüber einem Planetenträger und/oder Sonnenrad dient. Der Verbindungsbereich 15a ist hinsichtlich der Grundform pinförmig ausgebildet, wobei in axial gleichen Abständen vier umlaufende Widerhaken 19 radial davon abragen.

Figur 4b zeigt das anhand von Figur 4a erläuterte Gleitelement 15 in einem mit einer Schraubenfeder 14 verbundenen Zustand. Dabei wurde die Schraubenfeder 14 in axialer Richtung zuvor von außen auf den Verbindungsbereich 15a des Gleitelements 15 aufgeschoben. Die elastischen Widerhaken 19 haben durch Verformung ein Aufschieben der Schraubenfeder 14 ermöglicht. Im montierten Zustand verhindern die Widerhaken 19 durch ihre Sperrwirkung ein Lösen der Verbindung zwischen Schraubenfeder 14 und Gleitelement 15.

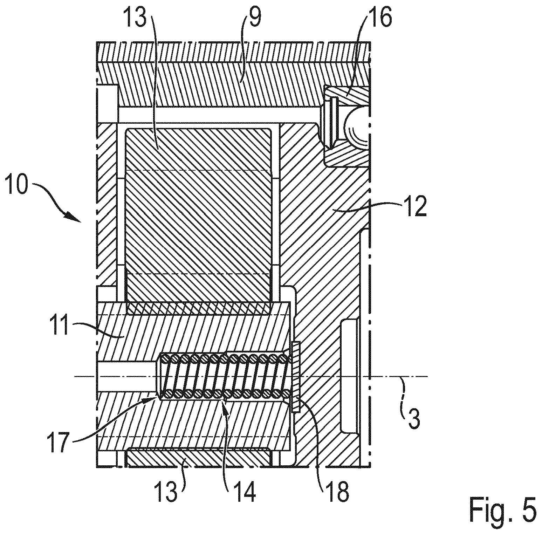

Figur 5 zeigt ein weiteres Ausführungsbeispiel einer erfindungsgemäßen Zahnradanordnung 10. Im Unterschied zu dem in Figur 3 gezeigten Ausführungsbeispiel ist ein Gleitelement 18 nun mit dem Planetenträger 12 verbunden, insbesondere darin eingepresst. Das Gleitelement 18 ist dazu beispielsweise als kreisrunde Scheibe aus Kunststoff oder Messing gefertigt und befindet sich wiederum zwischen einem axialen Ende der Schraubenfeder 14 und einer Kontaktfläche des Planetenträgers 12, um reibungsarme Relativbewegungen des Sonnenrads 11 gegenüber dem Planetenträger 12 um die Rotationsachse 3 zu begünstigen. Alternativ oder ergänzend könnte das Gleitelement 18 mit dem Planetenträger 12 verklebt sein. Eine Verbindung zwischen Federelement 14 und Gleitelement entfällt damit, vielmehr findet die Relativbewegung zwischen eben diesen Bauteilen statt.

Wiederum alternativ zu dem in Figur 5 gezeigten Ausführungsbeispiel könnte wenigstens eine dem Federelement zugewandte Kontaktfläche des Planetenträgers und/oder Sonnenrads gleitoptimiert ausgeführt sein, beispielsweise durch eine Beschichtung aus einem reibungsoptimierten Material, wie Molybdän oder DLC.

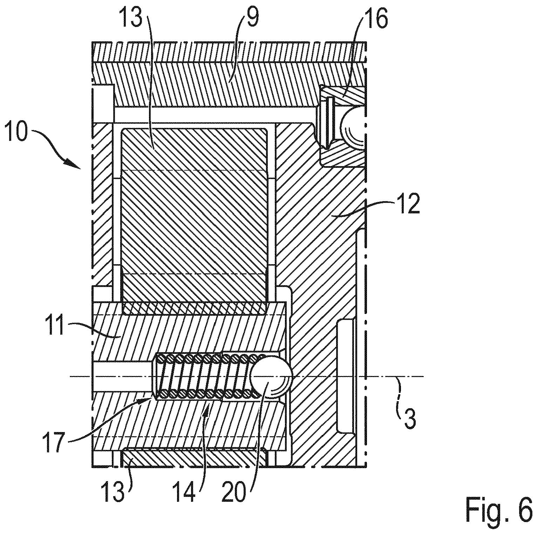

Figur 6 zeigt eine Zahnradanordnung gemäß einem weiteren Ausführungsbeispiel der Erfindung. Die Zahnradanordnung 10 gemäß Figur 6 entspricht in zahlreichen Merkmalen der Zahnradanordnung gemäß Figur 3, wozu auf die dortigen Ausführungen verwiesen wird, um Wiederholungen zu vermeiden. Dazu im Unterschied ist bei der in Figur 6 dargestellten Zahnradanordnung 10 das Gleitelement 20 als Kugel ausgeführt. Die Schraubenfeder 14 stützt sich mit ihrem dem Planetenträger 12 zugewandten axialen Ende somit auf der Kugel 20 ab, die sich wiederum im Bereich der Rotationsachse 3 punktähnlich gegenüber dem Planetenträger 12 axial abstützt. Aufgrund der punktähnlichen Kontaktierung des Planetenträgers 12 wird in der Zahnradanordnung 10 gemäß Figur 6 einerseits eine axiale Vorspannung erzielt, zugleich können Sonnenrad 11 und Planetenträger 12 reibungsarm gegeneinander um die Rotationsachse 3 unter Erzielung eines Spielausgleichs drehen.

### Bezugszeichen

- 1: Wankstabilisator
- 2: Aktuator
- 3: Rotationsachse
- 4a, 4b: Stabilisatorabschnitt
- 5a, 5b: Rad
- 6a, 6b: Radaufhängung
- 7: Elektromotor
- 8: mehrstufiges Planetengetriebe
- 9: Aktuatorgehäuse
- 10: Zahnradanordnung
- 11: Sonnenrad
- 12: Planetenträger
- 13: Planetenrad
- 14: Schraubenfeder
- 15: Gleitelement (fest an Schraubenfeder)
- 15a: Verbindungsbereich
- 15b: Gleitbereich
- 16: Wälzlager
- 17: Stufenbohrung
- 18: Gleitelement (fest am Planetenträger)
- 19: Widerhaken
- 20: Kugel

## Patentansprüche

1. Zahnradanordnung (10) eines insbesondere mehrstufigen Planetengetriebes (8) für einen Aktuator (2) eines verstellbaren Wankstabilisators (1), aufweisend ein Sonnenrad (11), einen Planetenträger (12) sowie mit dem Planetenträger (12) verbundene Planetenräder (13), die mit dem Sonnenrad (11) in kämmendem Eingriff stehen, wobei Sonnenrad (11) und Planetenträger (12) um eine gemeinsame Rotationsachse (3) drehbar sind und sich axial aufeinander abstützen, mit einem zwischen Planetenträger (12) und Sonnenrad (11) wirkenden Federelement (14) zur Erzielung einer axialen Vorspannung, wobei Mittel (15, 18, 20) zur Verminderung der Reibung des Federelements (14) gegenüber Planetenträger (12) und/oder Sonnenrad (11) vorgesehen sind, **dadurch gekennzeichnet, dass** im Sonnenrad (11) eine zentrale Ausnehmung (17) zur Aufnahme des Federelements (14) ausgebildet ist und wobei wenigstens eine dem Federelement zugewandte Kontaktfläche des Planetenträgers (12) und/oder Sonnenrads (11) gleitoptimiert ausgeführt ist.

2. Zahnradanordnung nach Anspruch 1, **dadurch gekennzeichnet, dass** auch im Planetenträger eine zentrale Ausnehmung (17) zur Aufnahme des Federelements (14) ausgebildet ist.

3. Zahnradanordnung nach Anspruch 1 oder 2, **dadurch gekennzeichnet, dass** es sich bei dem Federelement (14) um eine Schraubenfeder handelt.

4. Zahnradanordnung nach einem der vorigen Ansprüche, **dadurch gekennzeichnet, dass** die Ausnehmung (17) als axiale Bohrung, insbesondere als Stufenbohrung, im Sonnenrad (11) und/oder im Planetenträger ausgeführt ist, wobei sich im Fall einer Stufenbohrung das Federelement (14) axial an einem Absatz der Stufenbohrung abstützt.

5. Zahnradanordnung nach einem der vorigen Ansprüche, **dadurch gekennzeichnet, dass** zwischen wenigstens einem axialen Ende des Federelements (14) und einer diesem zugewandten Kontaktfläche des Planetenträgers (12) und/oder Sonnenrads (11) ein Gleitelement (15, 18, 20) zur Begünstigung reibungsarmer Relativbewegungen des Sonnenrads (11) gegenüber dem Planetenträger (12), insbesondere um die Rotationsachse (3), angeordnet ist.

6. Zahnradanordnung nach Anspruch 5, **dadurch gekennzeichnet, dass** das Gleitelement (15, 18, 20) aus Kunststoff oder Messing gefertigt ist.

7. Zahnradanordnung nach Anspruch 5 oder 6, **dadurch gekennzeichnet, dass** das Gleitelement (15) mit dem Federelement (14) verbunden ist, insbesondere durch Schnappbefestigungsmittel (19).

8. Zahnradanordnung nach einem der Ansprüche 5 bis 7, **dadurch gekennzeichnet, dass** das Gleitelement (15) einen dem Federelement (14) zugewandten Verbindungsbereich (15a) und einen dem Federelement (14) abgewandten Gleitbereich (15b) zur axialen Abstützung gegenüber dem Planetenträger (12) und/oder Sonnenrad (11) aufweist.

9. Zahnradanordnung nach einem der Ansprüche 5 bis 8, **dadurch gekennzeichnet, dass** der Verbindungsbereich (15a) des Gleitelements (15) geeignet ist, das Federelement (14) formschlüssig aufzunehmen, vorzugsweise ist der Verbindungsbereich (15a) dazu pinförmig, ringförmig oder hutförmig ausgebildet.

10. Zahnradanordnung nach einem der Ansprüche 5 bis 9, **dadurch gekennzeichnet, dass** das Gleitelement (18) mit dem Planetenträger (12) und/oder Sonnenrad verbunden, insbesondere darin eingepresst oder damit verklebt ist.

11. Zahnradanordnung nach einem der vorigen Ansprüche , **dadurch gekennzeichnet, dass** die wenigstens eine dem Federelement zugewandte Kontaktfläche des Planetenträgers und/oder Sonnenrads beschichtet ist.

12. Zahnradanordnung nach einem der Ansprüche 5 bis 11, **dadurch gekennzeichnet, dass** es sich bei dem Gleitelement (20) um eine Kugel handelt.

13. Zahnradanordnung nach einem der vorigen Ansprüche, **dadurch gekennzeichnet, dass** das Sonnenrad (11) mit dem Planetenträger einer vorgelagerten Planetenstufe des Planetengetriebes (8) drehfest verbunden, insbesondere einteilig damit ausgeführt ist.

14. Zahnradanordnung nach einem der vorigen Ansprüche, **dadurch gekennzeichnet, dass** die Zahnradanordnung (10) Teil der abtriebsseitigen Stufe des mehrstufigen Planetengetriebes (8) ist.

15. Aktuator (2) für einen verstellbaren Wankstabilisator (1) eines Kraftfahrzeugs, mit einem Elektromotor (7) und einem damit in Antriebsverbindung stehenden mehrstufigen Planetengetriebe (8), das eine Zahnradanordnung (10) nach einem der vorigen Ansprüche aufweist.

## Claims

1. Gearwheel arrangement (10) of an in particular multistage planetary gearing (8) for an actuator (2) of an adjustable roll stabilizer (1), having a sun gear (11), a planet carrier (12) and planet gears (13) which are connected to the planet carrier (12) and are in meshing engagement with the sun gear (11), wherein sun gear (11) and planet carrier (12) are rotatable about a common axis of rotation (3) and are supported axially on each other, with a spring element (14) which acts between the planet carrier (12) and sun gear (11) in order to obtain axial preloading, wherein means (15, 18, 20) for reducing the friction of the spring element (14) in relation to the planet carrier (12) and/or sun gear (11) are provided, **characterized in that** a central recess (17) for receiving the spring element (14) is formed in the sun gear (11), and at least one contact surface of the planet carrier (12) and/or sun gear (11), the contact surface facing the spring element, being optimized in terms of sliding.

2. Gearwheel arrangement according to Claim 1, **characterized in that** a central recess (17) for receiving the spring element (14) is also formed in the planet carrier.

3. Gearwheel arrangement according to Claim 1 or 2, **characterized in that** the spring element (14) is a helical spring.

4. Gearwheel arrangement according to one of the preceding claims, **characterized in that** the recess (17) is designed as an axial bore, in particular as a stepped bore, in the sun gear (11) and/or in the planet carrier, wherein, in the case of a stepped bore, the spring element (14) is supported axially on a shoulder of the stepped bore.

5. Gearwheel arrangement according to one of the preceding claims, **characterized in that** a sliding element (15, 18, 20) for promoting low-friction relative movements of the sun gear (11) in relation to the planet carrier (12), in particular about the axis of rotation (3), is arranged between the at least one axial end of the spring element (14) and a contact surface, facing the latter, of the planet carrier (12) and/or sun gear (11).

6. Gearwheel arrangement according to Claim 5, **characterized in that** the sliding element (15, 18, 20) is manufactured from plastic or brass.

7. Gearwheel arrangement according to Claim 5 or 6, **characterized in that** the sliding element (15) is connected to the spring element (14), in particular by snap fastening means (19).

8. Gearwheel arrangement according to one of Claims 5 to 7, **characterized in that** the sliding element (15) has a connecting region (15a) facing the spring element (14), and a sliding region (15b) facing away from the spring element (14), for axial support in relation to the planet carrier (12) and/or sun gear (11).

9. Gearwheel arrangement according to one of Claims 5 to 8, **characterized in that** the connecting region (15a) of the sliding element (15) is suitable for receiving the spring element (14) in a form-fitting manner, the connecting region (15a) preferably being pin-shaped, annular or hat-shaped for this purpose.

10. Gearwheel arrangement according to one of Claims 5 to 9, **characterized in that** the sliding element (18) is connected to the planet carrier (12) and/or sun gear, in particular is pressed therein or adhesively bonded thereto.

11. Gearwheel arrangement according to one of the preceding claims, **characterized in that** the at least one contact surface, that faces the spring element, of the planet carrier and/or sun gear is coated.

12. Gearwheel arrangement according to one of Claims 5 to 11, **characterized in that** the sliding element (20) is a ball.

13. Gearwheel arrangement according to one of the preceding claims, **characterized in that** the sun gear (11) is connected to the planet carrier of an upstream planet stage of the planetary gearing (8) for conjoint rotation, in particular is formed integrally therewith.

14. Gearwheel arrangement according to one of the preceding claims, **characterized in that** the gearwheel arrangement (10) is part of the output-side stage of the multistage planetary gearing (8).

15. Actuator (2) for an adjustable roll stabilizer (1) of a motor vehicle, having an electric motor (7) and a multistage planetary gearing (8) which is connected thereto in terms of drive and has a gearwheel arrangement (10) according to one of the preceding claims.

## Revendications

1. Arrangement de roues dentées (10) d'une transmission planétaire (8) en particulier polyétagée pour un actionneur (2) d'un stabilisateur antiroulis (1) réglable, présentant une roue planétaire (11), un porte-satellites (12) ainsi que des roues satellites (13) reliées au porte-satellites (12), lesquelles sont en prise par engrènement avec la roue planétaire (11), la roue planétaire (11) et le porte-satellites (12) pouvant tourner autour d'un axe de rotation (3) commun et étant supportés axialement l'un sur l'autre, à l'aide d'un élément ressort (14) agissant entre le porte-satellites (12) et la roue planétaire (11) pour produire une précontrainte axiale, des moyens (15, 18, 20) servant à réduire la friction de l'élément ressort (14) par rapport au porte-satellites (12) et/ou à la roue planétaire (11) étant prévus,
**caractérisé en ce qu'**un évidement (17) central servant à la réception de l'élément ressort (14) est formé dans la roue planétaire (11) et
au moins une surface de contact, tournée vers l'élément ressort, du porte-satellites (12) et/ou de la roue planétaire (11) étant réalisée de manière optimisée en termes de glissement.

2. Arrangement de roues dentées selon la revendication 1, **caractérisé en ce qu'**un évidement (17) central servant à la réception de l'élément ressort (14) est formé également dans le porte-satellites.

3. Arrangement de roues dentées selon la revendication 1 ou 2, **caractérisé en ce que** l'élément ressort (14) est un ressort hélicoïdal.

4. Arrangement de roues dentées selon l'une des revendications précédentes, **caractérisé en ce que** l'évidement (17) est réalisé sous forme d'alésage axial, en particulier sous forme d'alésage étagé, dans la roue planétaire (11) et/ou dans le porte-satellites, l'élément ressort (14) étant supporté axialement contre un épaulement de l'alésage étagé dans le cas d'un alésage étagé.

5. Arrangement de roues dentées selon l'une des revendications précédentes, **caractérisé en ce qu'**un élément de glissement (15, 18, 20) servant à favoriser des mouvements relatifs à faibles friction de la roue planétaire (11) par rapport au porte-satellites (12), en particulier autour de l'axe de rotation (3), est disposé entre au moins une extrémité axiale de l'élément ressort (14) et une surface de contact, tournée vers celui-ci, du porte-satellites (12) et/ou de la roue planétaire (11) .

6. Arrangement de roues dentées selon la revendication 5, **caractérisé en ce que** l'élément de glissement (15, 18, 20) est fabriqué à partir de matière synthétique ou de laiton.

7. Arrangement de roues dentées selon la revendication 5 ou 6, **caractérisé en ce que** l'élément de glissement (15) est relié à l'élément ressort (14), en particulier par le biais de moyens de fixation par encliquetage (19).

8. Arrangement de roues dentées selon l'une des revendications 5 à 7, **caractérisé en ce que** l'élément de glissement (15) présente une région de liaison (15a) tournée vers l'élément ressort (14) et une région de glissement (15b) opposée à l'élément ressort (14) pour le support axial par rapport au porte-satellites (12) et/ou à la roue planétaire (11).

9. Arrangement de roues dentées selon l'une des revendications 5 à 8, **caractérisé en ce que** la région de liaison (15a) de l'élément de glissement (15) est appropriée à recevoir l'élément ressort (14) avec complémentarité de formes, de préférence la région de liaison (15a) est réalisée à cet effet en forme de goupille, en forme d'anneau ou en forme de chapeau.

10. Arrangement de roues dentées selon l'une des revendications 5 à 9, **caractérisé en ce que** l'élément de glissement (18) est relié au porte-satellites (12) et/ou à la roue planétaire, en particulier est pressé dans celui-ci/celle-ci ou collé sur celui-ci/celle-ci.

11. Arrangement de roues dentées selon l'une des revendications précédentes, **caractérisé en ce que** l'au moins une surface de contact, tournée vers l'élément ressort, du porte-satellites et/ou de la roue planétaire est revêtue.

12. Arrangement de roues dentées selon l'une des revendications 5 à 11, **caractérisé en ce que** l'élément de glissement (20) est une bille.

13. Arrangement de roues dentées selon l'une des revendications précédentes, **caractérisé en ce que** la roue planétaire (11) est reliée de manière solidaire en rotation au porte-satellites d'un étage planétaire, monté en amont, de la transmission planétaire (8), en particulier réalisée d'un seul tenant avec celui-ci.

14. Arrangement de roues dentées selon l'une des revendications précédentes, **caractérisé en ce que** l'arrangement de roues dentées (10) fait partie de l'étage côté sortie de la transmission planétaire (8) polyétagée.

15. Actionneur (2) pour un stabilisateur antiroulis (1) réglable d'un véhicule automobile, comportant un moteur électrique (7) et une transmission planétaire (8) polyétagée en liaison d'entraînement avec celui-ci, laquelle transmission planétaire présente un arrangement de roues dentées (10) selon l'une des revendications précédentes.
